# EUROPEAN PATENT SPECIFICATION

(11) **EP 3 326 406 B1**
(45) Date of publication and mention of the grant of the patent: **27.05.2020**
(21) Application number: 15744533.9
(22) Date of filing: 23.07.2015
(51) Int. Cl.: H04W 24/02, H04W 8/18, H04W 8/24, H04W 60/00, H04W 88/18

(54) **ACCELERATION FACILITY CONTROL IN A NETWORK**
BESCHLEUNIGUNGSANLAGENSTEUERUNG IN EINEM NETZWERK
COMMANDE DE FONCTION D'ACCÉLÉRATION DANS UN RÉSEAU

(43) Date of publication of application: 30.05.2018
(73) Proprietor: Nokia Solutions and Networks Oy, 02610 Espoo (FI)
(72) Inventor: RASANEN, Juha Antero, FI-02660 Espoo (FI); ROOKE, Michael John, FI-05840 Hyvinkää (FI)
(74) Representative: Nokia EPO representatives
(86) International application number: PCT/EP2015/066905
(87) International publication number: WO 2017/012674

(56) References cited:
- EP-A2- 2 866 495
- WO-A1-2014/202151
- US-A1- 2011 171 953
- US-A1- 2014 219 272
- BABA HIROKI ET AL: "Lightweight virtualized evolved packet core architecture for future mobile communication", 2015 IEEE WIRELESS COMMUNICATIONS AND NETWORKING CONFERENCE (WCNC), IEEE, 9 March 2015 (2015-03-09), pages 1811-1816, XP032786584, DOI: 10.1109/WCNC.2015.7127743 [retrieved on 2015-06-17]

## Description

### Field of the invention

The present invention relates to an apparatus, a method, and a computer program product related to control of using acceleration facilities. More particularly, the present invention relates to an apparatus, a method, and a computer program product related to acceleration facility control in a network.

### Abbreviations

- 3GPP: 3rd Generation Partnership Project
- 5G: 5^{th} generation
- ASIC: Application Specific Integrated Circuit
- eNB: E-UTRAN Node B, evolved Node B, (Base station)
- AN: Access Node
- Appl: Application
- CPU: Central Processing Unit
- DB: Database
- ETSI: European Telecommunications Standards Institute
- GW: Gateway
- HSS: Home Subscriber Server
- HW: Hardware
- ID: Identifier
- IP: Internet Protocol
- IPCAN: IP Connectivity Access Network
- ISG: Industry Specification Group
- MANO: Management and Orchestration
- MEC: Mobile Edge Computing
- MME: Mobility Management Entity
- NFV: Network Function Virtualization
- PDN: Packet Data Network
- RAN: Radio Access Network
- Req: Requirement
- RF: Radio Frequency
- SA: System Architecture
- SW: Software
- UE: User Equipment
- VM: Virtual machine
- VNF: Virtualized network function

### Glossary

If not otherwise explained in the present description, the terms used herein have a meaning as according to ETSI GS NFV 003 V1.2.1 (2014-12): "Network Functions Virtualisation (NFV); Terminology for Main Concepts in NFV". For self-containment, the relevant definitions are repeated:
Network Function (NF): functional block within a network infrastructure that has well-defined external interfaces and well-defined functional behaviour.
Network Functions Virtualisation (NFV): principle of separating network functions from the hardware they run on by using virtual hardware abstraction.
Network Functions Virtualisation Infrastructure (NFVI): totality of all hardware and software components that build up the environment in which VNFs are deployed.
Network service: composition of Network Functions and defined by its functional and behavioural specification
Virtualised Network Function (VNF): implementation of an NF that can be deployed on a Network Function Virtualisation Infrastructure (NFVI)

Throughout the present application, if not otherwise indicated or made clear from the context, the terms "network function" and "network service" are used synonymously, i.e. a network function may be considered as a network service consisting of only this one network function.

Also, throughout the present application, if not otherwise indicated or made clear from the context, the terms "network service", "service" and "application" are used synonymously to describe a function the terminal accesses in the network. Part of the application may be installed on the terminal. In this case, the term "application" refers to that part that is provided on the network.

### Background of the invention

The non-normative phase 1 work in ETSI ISG NFV produced the following requirements for hardware / functional accelerators:
- Req PER/C1: The compute domain shall support discovery of hardware (HW) /functional accelerators.
- Req PER/C2: The compute domain shall support reservation of HW/functional accelerator resources.
- Req PER/C3: The compute domain shall support binding/attaching to HW/functional accelerators.
- Req PER/C4: The compute domain shall support unbinding/detaching from the HW/functional accelerator.
- Req PER/C5: The compute domain shall support collection of the HW functional performance metrics

ETSI ISG NFV has started the normative phase 2 work. NFV platform acceleration is an important topic in that work, refer to the prior art ETSI documents listed below.

3GPP has also started working on applying network function virtualization to the 3GPP mobile network environment. 3GPP SA5 has a related study item, refer to the prior art documents listed below. Standardization work is expected to start soon also on stage 2 level in 3GPP SA2.

Addressing the hardware / functional acceleration to create solutions for the 3GPP environment is expected to happen within the normative standardization work in ETSI and/or 3GPP.

Different applications may benefit more or less from different hardware/HW and/or software/SW acceleration facilities, and if relevant acceleration facilities are available on the platform, may use the services offered by the acceleration facilities to speed up the processing of the application. Storage, graphics, cryptography, video coding / decoding / transcoding, and pattern matching in the case of deep packet inspection are some typical examples. Having the accelerator close to e.g. the RAN for processing of baseband RF is another. In this case, there are advantages (in terms of latency) to process the data closer to the radio network edge (e.g. base station or base station controller) rather than sending raw RF stream over many kilometers for processing and returning some feedback over many kilometres.

In highly integrated environments like e.g. mobile edge computing (MEC), or in forthcoming developed environments like e.g. forthcoming 5^{th} generation networks (5G), mobile network gateway functionalities may be integrated to run on the same platforms with various applications and/or accelerators.

A platform (also denoted as platform device) may comprise at least some of the following in any possible combination: A hardware unit with processing, storage and communication capabilities, operating system, hypervisor, HW accelerators, SW accelerators, mobile network functionalities or parts of them (e.g. radio base station, serving gateway, PDN gateway, MME, PCRF) or parts of them, application server functionalities (e.g. as per draft Mobile Edge Computing / MEC specifications) with various applications or services. A typical example of a platform is a MEC server with some mobile network gateway functionalities integrated in it, or a 5^{th} generation local mobile network gateway possibly with some local applications integrated in it. According to recent discussions e.g. within 3GPP, an access gateway (serving gateway, PDN gateway) may also be split by separating the control plane and user plane from each other, the control plane being typically virtualized and running as a VNF on a virtual machine (VM) and the user plane running an a separate / dedicated gateway hardware. In such a case "the platform" used in the present text may actually comprise two separate entities/modules with a control interface between them.

Different HW and/or SW versions of platforms may support different levels of HW and/or SW acceleration facilities.

Consequently, servers and/or gateways on different platforms in a (mobile) communications system may support the same general functionalities, like basic mobile network gateway functionalities, but may be different in acceleration facilities related respects like HW acceleration facilities and/or SW acceleration facilities.

The following document describes background information:
- 3GPP SP-140398: WID on "Study on Network Management of Virtualized Networks".

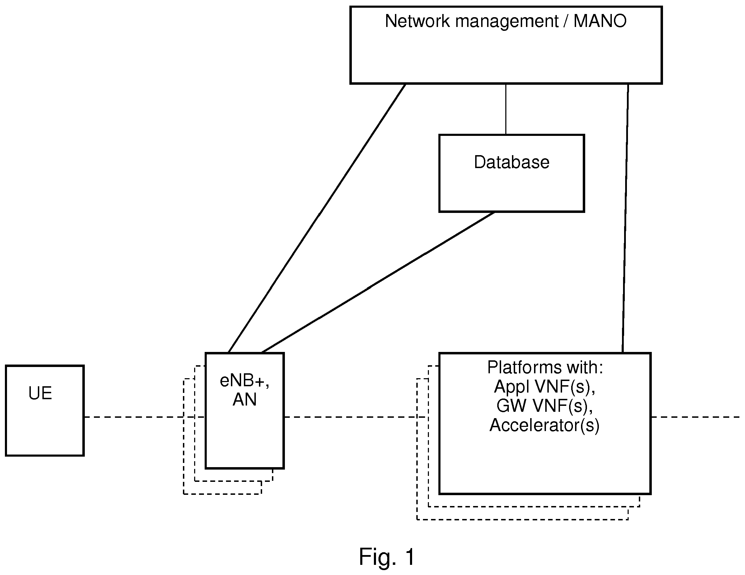

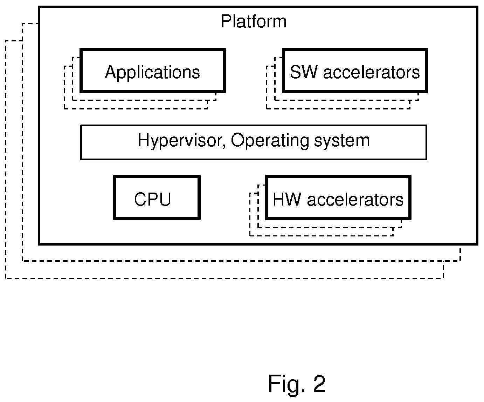

The document EP 2 866 495 A2 discloses gateways and methods for node selection of virtual network nodes in virtual evolved packet core networks. The methods include receiving, at a gateway from an evolved Node B (eNodeB), an attach request for a user equipment (UE), and determining a network selection hint corresponding to the received attach request, where the network selection hint is used for determining a virtual network node for selection in a mobile cloud network. The methods further include determining a domain name for establishing a network connection based at least in part on the network selection hint, where the selected domain name is associated with a virtual network node in the mobile cloud network. The methods also include selecting a virtual network node associated with the determined domain name, and establishing a network session to the selected virtual network node. Based on the prior art, a simplified architecture as depicted in Figs. 1 and 2 may be deduced for the 3GPP mobile network environment.

According to Fig. 1, the UE may attach to an access node (AN) such as a base station (e.g. eNB+ in 5G) and from there to a platform representing a core network (indicated by dashed lines in Fig. 1; continuous lines indicate control connections). Typically, there are plural access nodes in the network. The AN or ANs represent the RAN.

The AN is connected (inter alia) to a network management system (MANO) and a database comprising e.g. configuration data of one or more platforms representing the core network. In a virtualized environment, the platforms are managed and orchestrated by MANO.

The platform may comprise HW (e.g. CPU) and SW (e.g. a hypervisor and an operating system)(see Fig. 2). On the platform run e.g. one or more application VNFs providing a respective application functionality such as a gateway VNF(s) providing a respective gateway functionality. The gateway VNF may be considered as a particular kind of an application VNF.

In addition, one or more accelerators may be provided on the platform. The accelerators may be based on HW and/or SW, refer to figure 2. A HW accelerator may be a dedicated piece of hardware that performs a certain function, e.g. arithmetics or pattern detection instead of the CPU doing it with software. A HW accelerator may also be programmable, typically implemented as an ASIC (Application specific integrated circuit), meaning that the same HW circuit may take different accelerator roles depending on how it is programmed. A SW accelerator is a software module dedicated to perform a given task, e.g. coding/decoding/transcoding or cryptography or graphics, according to the input parameters given to it. In general, pattern detection e.g. for application detection, arithmetics, video coding/decoding/transcoding, cryptography and graphics are examples of areas wherein HW and/or SW acceleration functions may speed up the operations compared to a pure CPU based implementation.

### Summary of the invention

It is an object of the present invention to improve the prior art.

According to a first aspect of the invention, there is provided an apparatus as set forth in claim 1. The apparatus comprises profile monitoring means adapted to monitor if a received user request of a terminal comprises an indication of a device profile of the terminal; selecting means adapted to select the platform device for further processing of the user request based on the device profile and a hardware and/or software acceleration facility of the platform device.

According to a second aspect of the invention, there is provided an apparatus as set forth in claim 2. The apparatus comprises service information requesting means adapted to request, by an information request, an information on a service a user is allowed to invoke; receiving means adapted to receive the information on the service in response to the information request; selecting means adapted to select the platform device for processing of a service request of the user based on the received information on the service and a hardware and/or software acceleration facility of the platform device.

For each of the first and second aspects, the following options may apply:
The apparatus may further comprise profile monitoring means adapted to monitor if a user request of the user comprises an indication of a device profile of a terminal, wherein the user request is received from the terminal; wherein the selecting means is adapted to select the platform device additionally based on the device profile.

The apparatus may further comprise monitoring means adapted to monitor if a user request of the user is received; triggering means adapted to trigger the service information requesting means to request the information on the service if the user request is received.

The receiving means may be adapted to receive a subscription profile of the user in response to the information request; and the apparatus may further comprise retrieving means adapted to retrieve the information on the service from the subscription profile.

The receiving means may be adapted to further receive an information of an allowed acceleration facility indicating an acceleration facility allowed to be used if the user invokes the service; the selecting means may be adapted to select the platform device additionally based on the allowed acceleration facility.

The device profile may comprise at least one of one or more indications of capabilities among a hardware related capability of the terminal, a software related capability of the terminal, an application related capability of the terminal, an application supported by the terminal, and an application type supported by the terminal, and an indication of the acceleration facility.

The apparatus may further comprise configuration storing means adapted to store an information on the acceleration facility, wherein the information on the acceleration facility is received from a management and orchestration device.

The apparatus may further comprise configuration requesting means adapted to request the information on the acceleration facility from the management and orchestration device; configuration receiving means adapted to receive the information on the acceleration facility from the management and orchestration device.

The user request may be at least one of an attach request and a request for a service.

According to a third aspect of the invention, there is provided an apparatus as set forth in claim 8. The apparatus comprises storing means adapted to store a subscription profile for a user, wherein the subscription profile comprises an indication of a service the user is allowed to use and an indication of a hardware and/or software acceleration facility that may be used to run the service for the user, and providing means adapted to provide the indication of the hardware and/or software acceleration facility in response to a request for an information on services the user is allowed to invoke.

According to a fourth aspect of the invention, there is provided a method as set forth in claim 9. The method comprises monitoring if a received user request of a terminal comprises an indication of a device profile of the terminal; selecting the platform device for further processing of the user request based on the device profile and a hardware and/or software acceleration facility of the platform device.

According to a fifth aspect of the invention, there is provided a method as set forth in claim 10. The method comprises requesting, by an information request, an information on a service a user is allowed to invoke; receiving the information on the service in response to the information request; selecting the platform device for processing of a service request of the user based on the received information on the service and a hardware and/or software acceleration facility of the platform device.

For each of the fourth and fifth aspects, the following options may apply:
The method may further comprise monitoring if a user request of the user comprises an indication of a device profile of a terminal, wherein the user request is received from the terminal; wherein the selecting of the platform device may be additionally based on the device profile.

The method may further comprise monitoring if a user request of the user is received; triggering the requesting of the information on the service if the user request is received.

A subscription profile of the user may be received in response to the information request; and the method may further comprise retrieving the information on the service from the subscription profile.

An information of an allowed acceleration facility may be received, wherein the allowed acceleration facility indicates an acceleration facility allowed to be used if the user invokes the service; the platform device may be selected additionally based on the allowed acceleration facility.

The device profile may comprises at least one of one or more indications of capabilities among a hardware related capability of the terminal, a software related capability of the terminal, an application related capability of the terminal, an application supported by the terminal, and an application type supported by the terminal, and an indication of the acceleration facility.

The method may further comprise storing an information on the acceleration facility, wherein the information on the acceleration facility is received from a management and orchestration device.

The method may further comprise requesting the information on the acceleration facility from the management and orchestration device; receiving the information on the acceleration facility from the management and orchestration device.

The user request may be at least one of an attach request and a request for a service. According to a sixth aspect of the invention, there is provided a method as set forth in claim 16. The method comprises storing a subscription profile for a user, wherein the subscription profile comprises an indication of a service the user is allowed to use and an indication of an acceleration facility that may be used to run the service for the user.

The method may further comprise providing the indication of the acceleration facility in response to a request for an information on services the user is allowed to invoke.

The method according to each of the fourth to sixth aspects may be a method of acceleration facility control.

The acceleration facility according to any of the first to twelfth aspects may be at least one of a hardware acceleration facility and a software acceleration facility.

According to a seventh aspect of the invention, there is provided a computer program product as set forth in claim 17. The computer program product may be embodied as a computer-readable medium or directly loadable into a computer.

According to some example embodiments of the invention, at least one of the following technical effects is provided:
- services may run on HW and/or SW best suited with respect to their acceleration facility;
- users may be differentiated according to the acceleration facilities available to them; and
- acceleration facilities may be used most efficiently.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of example embodiments of the present invention which is to be taken in conjunction with the appended drawings, wherein
- Fig. 1: shows a simplified architecture of a 3GPP mobile network environment;
- Fig. 2: shows a platform architecture;
- Fig. 3: shows a message flow according to an example embodiment of the invention;
- Fig. 4: shows an apparatus according to an example embodiment of the invention;
- Fig. 5: shows a method according to an example embodiment of the invention;
- Fig. 6: shows an apparatus according to an example embodiment of the invention;
- Fig. 7: shows a method according to an example embodiment of the invention;
- Fig. 8: shows an apparatus according to an example embodiment of the invention;
- Fig. 9: shows a method according to an example embodiment of the invention;
- Fig. 10: shows an apparatus according to an example embodiment of the invention;
- Fig. 11: shows a method according to an example embodiment of the invention; and
- Fig. 12: shows an apparatus according to an example embodiment of the invention.

### Detailed description of certain example embodiments

Herein below, certain example embodiments of the present invention are described in detail with reference to the accompanying drawings, wherein the features of the example embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

Some embodiments of the invention provide a solution to the following technical problem: When a UE attaches a network that supports different kinds of GWs/servers with different kinds of acceleration facilities, the question is how to select a proper GW/server for the UE to optimise the performance of the services potentially invoked by the UE, especially regarding the availability and use of acceleration facilities of the platforms.

According to some embodiments of the invention, a UE attaching a network indicates a device profile (e.g. related to HW capabilities, SW capabilities, applications related capabilities / supported applications / application types) when attaching the network. The information of the device profile may be classified and/or coded in a proper and simple enough format.

For example, application identifiers may be defined to identify applications that may benefit from the availability of a given acceleration function on a platform offering the service. The UE may then send to the network the identifiers of the application(s) the user/UE wants to be taken into account by the network in processing the session for the UE. When new applications with new accelerator requirements appear on the market, SW updates may bring the new identifiers on UEs. And when operators update their networks with new platform versions with new accelerator functions, the update may bring the new identifiers on the relevant network entities.

As another example, identifiers may be defined for accelerator functions. In that case the UE may indicate the accelerator function(s) it may need or benefit from. And again, when new applications with new accelerator requirements appear on the market, SW updates may bring the new identifiers on UEs and SW and/or HW updates to networks. So, in some embodiments of the invention, the device profile may be defined such that it enables the network to determine the kind of HW acceleration facilities and or SW acceleration facilities sessions of the UE could potentially benefit from.

The classification (i.e., the decision, which acceleration facilities are useful for the UE) may be based on known relationships between capabilities/applications and acceleration facilities that support them. In some embodiments of the invention, the UE may perform the classification autonomously. In these embodiments, the device profile provided by the UE comprises information to the network which acceleration facilities are useful for the UE. In some embodiments of the invention, with the device profile, the UE provides information about its capabilities, and the network (i.e., an AN) decides, based on the capabilities, which acceleration facilities are useful for the UE. In some embodiments of the invention, the device profile comprises both information on useful acceleration facilities and capabilities of the UE. E.g., if the UE is not aware which acceleration facilities are useful for a subset of its capabilities, it may inform the network about these capabilities. For the other capabilities, it may inform the network on the useful acceleration facilities.

For the present application, a device which may forward a user request from the UE to one of plural devices providing the same function of further processing the user request is considered to be an access node (AN), while the corresponding plural devices are considered to be platforms. Thus, e.g. a base station (eNB) may be an AN, while, in this case, MME is considered to be implemented on one or more platforms.

In another case, MME (either as separate entity or integrated with other functionality in a common unit) may be considered as an AN. In detail, MME comprises only control plane and may select a gateway (to be considered as implemented on a platform) for the UE. (In current 3GPP specs MME selects the next entity of the access network, i.e. the S-GW, but 5G and MEC will probably more or less integrate functionalities in common entities). The case MME is implemented on a platform has been discussed on many NFV related slide sets, which suggest integrating MME, PCRF and the control planes of S-GW and P-GW in the same virtualized entity. Also, the case MME as an AN has been discussed on some 5G related slide sets, where the MME and the control planes of S-GW and P-GW may (at least partly) be integrated in an AN.

According to some embodiments of the invention, the user may limit the indicated device profile to what he/she currently expects to need. That is, instead of a full capability (e.g. full throughput), the user may indicate a corresponding lower capability (i.e., a lower throughput). The device profile may then comprise the limited capability only, or it may comprise both the limited capability and the full capability. A motive for such limitation may be e.g. lower charging e.g. due to different/lesser usage of network resources.

According to some embodiments of the invention, the network access node (e.g. eNB/5G or MME) that receives/handles the attach request (or another user request, see below) sent by the UE, may send a request/enquiry to a subscriber database (e.g. HSS) to fetch possible information or requirements related to services that may benefit from using acceleration facilities offered by some available GWs/platforms. In some embodiments of the invention, the requested/fetched information comprises the whole subscription profile of the user (since this may make a further enquiry redundant).

The network access node (eNB/MME) is (made and) kept aware of currently available HW / platform types with their acceleration facilities and possible applications supported by / running on them. For example, the up-to-date information may be maintained by the network management system / MANO, and may be available at the access node (e.g., in current 3GPP system information about available selectable next entities is typically semi-permanently configured in selecting entities) or may be fetched by the access node from where ever the information is maintained).

According to some embodiments of the invention, the access node selects a GW / platform that resides on a dedicated HW platform that supports proper HW and/or SW acceleration facilities and applications for the profile of the UE/device indicated by the UE in the attach request and the subscription profile of the user. For example, if the subscription profile supports applications/capabilities X, Y and Z and the attach request indicates applications/capabilities Y, Z and W, then the access node selects a GW / platform that has acceleration facilities for applications/capabilities Y and Z, if resources are available on such a GW / platform.

In some embodiments of the invention, the AN may evaluate only one of the device profile and the subscription profile to select a GW / platform. In embodiments not evaluating the device profile, the attach request may or may not comprise information on the device profile. In embodiments not evaluating the subscription profile or relevant parts thereof, the AN may or may not request the same from the subscriber database.

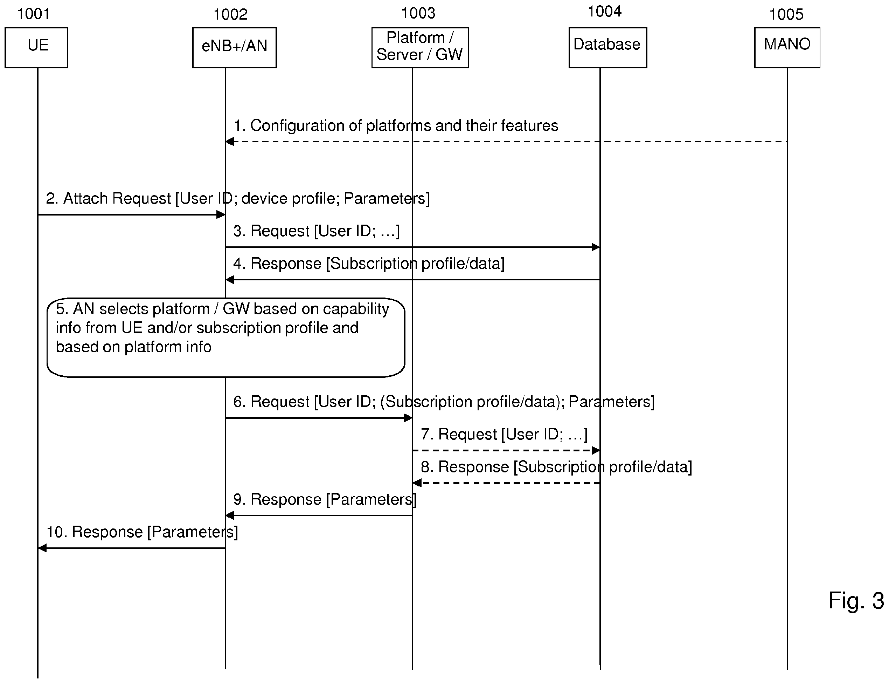

Fig. 3 shows a message flow according to an example embodiment of the invention. It involves UE 1001, access node 1002 (e.g. eNB), platform 1003 (e.g. server with GW functionality), database 1004 (e.g. HSS), and management system 1005 (e.g. MANO).

By message 1, MANO 1005 informs AN 1002 on the configuration of available platforms. In particular, it informs on the basic functionality provided by the platforms (such as platform 1003) and their acceleration facilities. Message 1 may be sent from MANO 1005 to AN 1002 e.g. on a regular basis, on request of AN 1002, or event driven, i.e. it is sent if the configuration of a platform is modified. The message may provide the full configuration information or information on a difference to a previous configuration.

In some embodiments of the invention, message 1 may be omitted (indicated by a dashed line in Fig. 3). E.g., the operator may inform AN 1002 manually on the configurations of the platforms, or the configuration of the platforms may be stored persistently in the AN 1002.

By message 2, the UE 1001 requests to attach to the network via the AN 1002. The attach request to the AN 1002 comprises, in addition to a user ID of a user of the UE 1001, a device profile of the UE. The device profile may comprise information of capabilities of the UE. The capabilities may be related to HW and/or SW and/or one or more applications. In some embodiments, the device profile comprises information about useful acceleration facilities. The attach request may comprise further parameters.

Upon receipt of the attach request of message 2, AN 1002 requests by message 3 subscription data of the user from database 1004, based on the user ID received in the attach request. The subscription data comprise information which services the user is allowed to use. By message 4, the database 1004 provides the requested subscription data. E.g., the database may provide the full subscription profile in message 4, from which AN retrieves the relevant information on allowed services.

As shown in box 5, AN selects a platform/server/GW such as platform 1003 based on the platform configuration information received by message 1 and based on at least one of the device profile received by message 2 and the subscription data received by message 4.

Then, in message 6, the attach request (or a corresponding message) is forwarded from AN 1002 to platform 1003 for further processing. The request of message 6 comprises the user ID. In addition, it may comprise the subscription profile (or some data thereof) of message 4. The request of message 6 may or may not comprise the device profile of the attach request (message 2) because the same is not relevant for the selected platform 1003.

If the request of message 6 comprises the full subscription profile (or at least the information relevant for platform 1003), messages 7 and 8 may be omitted (indicated by dashed lines). Otherwise, by message 7, platform 1003 requests the subscription profile (or relevant data thereof) from database 1004, which provides database 1004 to platform 1003 by message 8.

Messages 9 and 10 are the responses to messages 6 and 2, respectively. E.g., these messages are as known in the art.

In some embodiments of the invention, the attach request message 2 in Fig. 3 may be a more general request message, i.e. a service request message requesting a service for a user of the terminal. Both the attach request and the service request message may be considered as user requests. In such embodiments, the UE may already earlier have attached to the network. The service request message may contain the device profile in a similar way as described for the attach request message, and/or it may update the device profile, e.g. limit or expand the capability indications. The network may then use the device profile to select a new platform for the UE, if the existing/current platform does not support relevant acceleration facilities. E.g., the selection of a new platform may lead to setting up a new IPCAN session between the UE and the new platform, i.e. a kind if attach procedure triggered by the service request message. The UE may maintain the original IPCAN session to the original platform, or it may terminate the original IPCAN session.

If a user/UE session is directed to a platform as in the basic cases above, all acceleration facilities supported by the platform are available to applications/services used by the UE. I.e. there are no user/UE specific limitations for the use of the acceleration facilities for applications/services available for the user according to the subscription profile (and the indication in the attach request.

According to some embodiments of the invention, the usage of acceleration facilities may be user specific. For this purpose, a same VNF / application may be defined in the database differently for different sets of acceleration facilities. E.g., the same application may have a different index for different acceleration facilities, and the subscription data/profiles of some or all of the subscribers comprise the respective index in addition to the information on the application. For example, application X for subscriber A has an index 1 meaning that the application may be used with a full set of related acceleration facilities, application X for subscriber B has an index 2 meaning that the application may be used with a limited set of related acceleration facilities, and application X for subscriber C has an index 3 meaning that this subscriber may just use the plain application without any acceleration facility. In the message flow of Fig. 3, the index is provided from database 1004 to AN 1002 by message 4, and the index is evaluated in the selection step 5 to select an appropriate GW / platform 1003 for each of subscribers A, B and C.

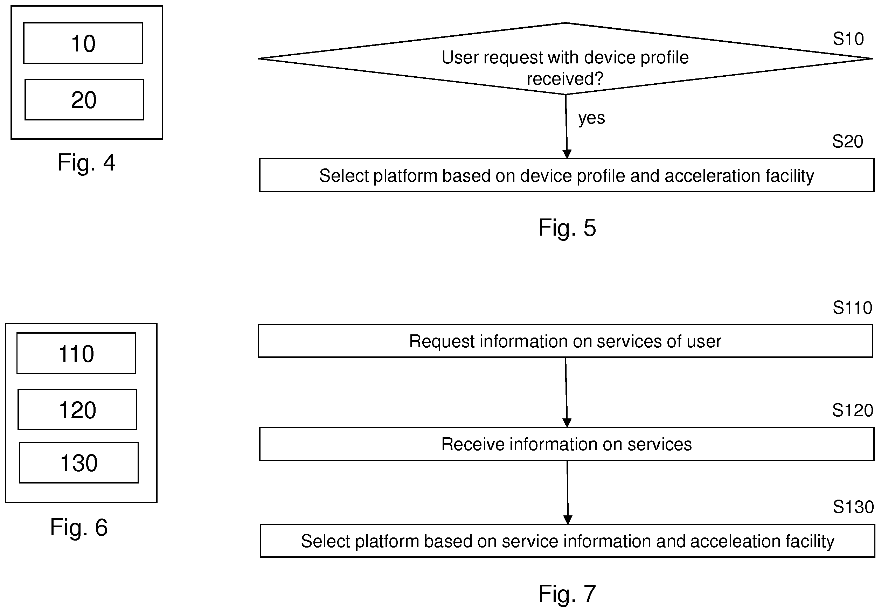

Fig. 4 shows an apparatus according to an example embodiment of the invention. The apparatus may be an access node such as a base station, or an element thereof. Fig. 5 shows a method according to an example embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises profile monitoring means 10 and selecting means 20. The profile monitoring means 10 and selecting means 20 may be a profile monitoring circuitry and selecting circuitry, respectively.

The profile monitoring means 10 monitors if a received request of a terminal comprises an indication of a device profile of the terminal (S10). The request may be a user request such as at least one of an attach request and a service request. The device profile may comprise one or more indications of capabilities among a hardware related capability of the terminal, a software related capability of the terminal, an application related capability of the terminal, an application supported by the terminal, and an application type supported by the terminal, and/or the device profile may comprise an indication of the acceleration facility.

If the request is received (S10 = "yes"), the selecting means 20 selects a platform device for further processing of the request based on the device profile and an acceleration facility of the platform device (S20). The selecting means may have stored information on the acceleration facility, and/or it may request information on the acceleration facility from a management device such as MANO. The platform device may provide e.g. a gateway functionality.

Fig. 6 shows an apparatus according to an example embodiment of the invention. The apparatus may be an access node such as a base station, or an element thereof. Fig. 7 shows a method according to an example embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises profile service information requesting means 110, receiving means 120, and selecting means 130. The service information requesting means 110, receiving means 120, and selecting means 130 may be a service information requesting circuitry, receiving circuitry, and selecting circuitry, respectively.

The service information requesting means 110 requests an information on a service the user is allowed to invoke (S110). E.g., the service information requesting means 110 may be triggered to request the information upon receipt of a user request (e.g. at least one of an attach request and a service request) comprising an identifier of the user. In some embodiments, the service information requesting means may be triggered based on other events. E.g., a subscriber database may trigger the service information requesting means because the subscription profile (e.g. the subscriber specific acceleration facilities) of the user was changed.

The receiving means 120 receives the information on the service in response to the request for the information (S120).

The selecting means 130 selects a platform device for further processing of requests from the user (e.g. at least one of the attach request and the service request mentioned above) based on the received information on the service and an acceleration facility of the platform device (S130). If S110 was not triggered by a user request, the selecting means 130 may select the platform device for future user requests. In this case, processing of the future user requests may be accelerated.

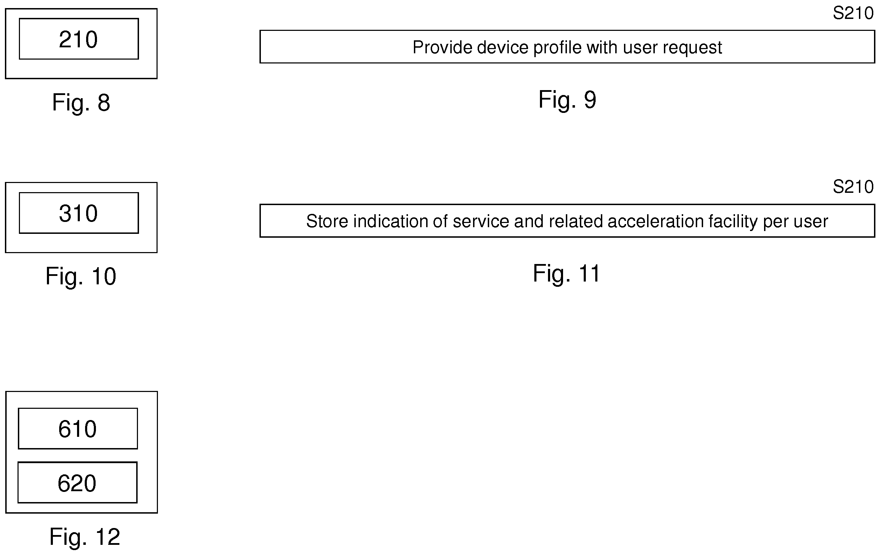

Fig. 8 shows an apparatus according to an example embodiment of the invention. The apparatus may be a terminal such as a UE, or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises providing means 210. The providing means 210 may be a providing circuitry.

The providing means 210 provides an indication of a device profile of a terminal together with a user request of the terminal (S210). The terminal comprises the apparatus. The terminal may be the apparatus. The user request may be at least one of an attach request and a service request.

Fig. 10 shows an apparatus according to an example embodiment of the invention. The apparatus may be a database such as a HSS, or an element thereof. Fig. 11 shows a method according to an example embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises storing means 310. The storing means 310 may be a storing circuitry.

The storing means 310 stores a subscription profile for a user (S310). The subscription profile comprises an indication of a service the user is allowed to use and an indication of an acceleration facility that may be used to run the service for the user.

Fig. 12 shows an apparatus according to an example embodiment of the invention. The apparatus comprises at least one processor 610, at least one memory 620 including computer program code, and the at least one processor 610, with the at least one memory 620 and the computer program code, being arranged to cause the apparatus to at least perform at least one of the methods according to Figs. 5, 7, 9, and 11 and related description.

Embodiments of the invention have been discussed with a focus on virtualization of some network function (e.g. a gateway function or a MME function) on a platform. However, in some embodiments of the invention, the network function is not virtualized but implemented on respective dedicated HW and/or SW. In this case, the same network function may be provided on devices (HW and/or SW) with different acceleration facilities, and the AN may choose one of these devices based on the acceleration facilities.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

Some example embodiments of the invention may be applied to a 3GPP network (e.g. LTE, LTE-A, or a 5G network), as described hereinabove. However, some example embodiments of the invention may be applied to any kind of network wherein a network function may be implemented on different HW and/or SW with different acceleration facilities. In particular, it may be implemented in case the network function is virtualized.

A terminal may be any kind of terminal which may attach to the respective network. E.g., a terminal may be a UE, a device of a machine-type communication, a laptop, a smartphone, a mobile phone etc.

According to the above description, it should thus be apparent that example embodiments of the present invention provide, for example an access node such as a base station (e.g. NodeB, eNodeB, eNodeB+), or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example a terminal such as a UE, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example subscriber register such as a HSS, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques, means, entities, units, devices, or methods include, as non-limiting examples, implementations as hardware, software, firmware, special purpose circuits or logic, general purpose hardware or controller or other computing devices, a virtual machine, or some combination thereof.

It should be noted that the description of the embodiments is given by way of example only and that various modifications may be made without departing from the scope of the invention as defined by the appended claims.

## Claims

1. An apparatus (1002) for selecting a platform device in a network comprising platform devices with different kinds of acceleration facilities, comprising
profile monitoring means adapted to monitor (S10) if a received user request (2) of a terminal comprises an indication of a device profile of the terminal;
selecting means adapted to select (5, S20) the platform device for further processing of the user request based on the device profile and a hardware and/or software acceleration facility of the platform device.

2. An apparatus (1002) for selecting a platform device in a network comprising platform devices with different kinds of acceleration facilities, comprising
service information requesting means adapted to request (S110), by an information request (3), an information on a service a user is allowed to invoke;
receiving means adapted to receive (4, S120) the information on the service in response to the information request;
selecting means adapted to select (5, S130) the platform device for processing of a service request of the user based on the received information on the service and a hardware and/or software acceleration facility of the platform device.

3. The apparatus according to claim 2, further comprising
profile monitoring means adapted to monitor if a user request of the user comprises an indication of a device profile of a terminal, wherein the user request is received from the terminal; wherein
the selecting means is adapted to select the platform device additionally based on the device profile.

4. The apparatus according to any of claims 2 and 3, further comprising
monitoring means adapted to monitor if a user request of the user is received;
triggering means adapted to trigger the service information requesting means to request the information on the service if the user request is received.

5. The apparatus according to any of claims 2 to 4, wherein
the receiving means is adapted to receive a subscription profile of the user in response to the information request;
and the apparatus further comprises
retrieving means adapted to retrieve the information on the service from the subscription profile.

6. The apparatus according to claim 1 or 3, wherein at least one of
the device profile comprises one or more indications of capabilities among a hardware related capability of the terminal, a software related capability of the terminal, an application related capability of the terminal, an application supported by the terminal, and an application type supported by the terminal, and
the device profile comprises an indication of the hardware and/or software acceleration facility.

7. The apparatus according to any of claims 1 to 6, further comprising
configuration storing means adapted to store an information on the hardware and/or software acceleration facility, wherein the information on the hardware and/or software acceleration facility is received from a management and orchestration device;
configuration requesting means adapted to request the information on the hardware and/or software acceleration facility from the management and orchestration device; and
configuration receiving means adapted to receive the information on the hardware and/or software acceleration facility from the management and orchestration device.

8. An apparatus (1004), comprising storing means adapted to store a subscription profile for a user, wherein the subscription profile comprises an indication of a service the user is allowed to use and an indication of a hardware and/or software acceleration facility that may be used to run the service for the user; and
providing means adapted to provide (4) the indication of the hardware and/or software acceleration facility in response to a request (3) for an information on services the user is allowed to invoke.

9. A method for selecting a platform device in a network comprising platform devices with different kinds of acceleration facilities, the method being performed in an access node (1002) and comprising monitoring (S10) if a received user request (2) of a terminal comprises an indication of a device profile of the terminal;
selecting (5, S20) the platform device for further processing of the user request based on the device profile and a hardware and/or software acceleration facility of the platform device.

10. A method for selecting a platform device in a network comprising platform devices with different kinds of acceleration facilities, the method being performed in an access node (1002) and comprising requesting (S110), by an information request (3), an information on a service a user is allowed to invoke;
receiving (4, S120) the information on the service in response to the information request;
selecting (S130) the platform device for processing of a service request of the user based on the received information on the service and a hardware and/or software acceleration facility of the platform device.

11. The method according to claim 10, further comprising
monitoring if a user request of the user comprises an indication of a device profile of a terminal, wherein the user request is received from the terminal; wherein
the selecting of the platform device is additionally based on the device profile.

12. The method according to any of claims 10 and 11, further comprising
monitoring if a user request of the user is received;
triggering the requesting of the information on the service if the user request is received.

13. The method according to any of claims 10 to 12, wherein
a subscription profile of the user is received in response to the information request; and the method further comprises
retrieving the information on the service from the subscription profile.

14. The method according to claim 9 or 11, wherein at least one of
the device profile comprises one or more indications of capabilities among a hardware related capability of the terminal, a software related capability of the terminal, an application related capability of the terminal, an application supported by the terminal, and an application type supported by the terminal, and
the device profile comprises an indication of the hardware and/or software acceleration facility.

15. The method according to any of claims 9 to 14, further comprising
storing an information on the hardware and/or software acceleration facility, wherein the information on the hardware and/or software acceleration facility is received from a management and orchestration device;
requesting the information on the hardware and/or software acceleration facility from the management and orchestration device; and
receiving the information on the hardware and/or software acceleration facility from the management and orchestration device.

16. A method performed in a database (1004), comprising
storing a subscription profile for a user, wherein the subscription profile comprises an indication of a service the user is allowed to use and an indication of a hardware and/or software acceleration facility that may be used to run the service for the user; and
providing (4) the indication of the hardware and/or software acceleration facility in response to a request (3) for an information on services the user is allowed to invoke.

17. A computer program product comprising a set of instructions which, when the program is executed by a computer, cause the computer to carry out the method according to any of claims 9 to 16.

## Patentansprüche

1. Einrichtung (1002) zum Auswählen einer Plattformvorrichtung in einem Netz, das Plattformvorrichtungen mit verschiedenen Arten von Beschleunigungshilfsmitteln umfasst, umfassend:
Profilüberwachungsmittel, die eingerichtet sind zum Überwachen (S10), ob eine empfangene Benutzeranforderung (2) eines Endgeräts eine Angabe eines Vorrichtungsprofils des Endgeräts umfasst;
Auswahlmittel, die eingerichtet sind zum Auswählen (5, S20) der Plattformvorrichtung zum weiteren Verarbeiten der Benutzeranforderung basierend auf dem Vorrichtungsprofil und einem Hardware- und/oder Software-Beschleunigungshilfsmittel der Plattformvorrichtung.

2. Einrichtung (1002) zum Auswählen einer Plattformvorrichtung in einem Netz, das Plattformvorrichtungen mit verschiedenen Arten von Beschleunigungshilfsmitteln umfasst, umfassend:
Dienstinformationsanforderungsmittel, die eingerichtet sind zum Anfordern (S110), durch eine Informationsanforderung (3), einer Information über einen Dienst, den ein Benutzer aufrufen darf;
Empfangsmittel, die eingerichtet sind zum Empfangen (4, S120) der Information über den Dienst als Reaktion auf die Informationsanforderung;
Auswahlmittel, die eingerichtet sind zum Auswählen (5, S130) der Plattformvorrichtung zum Verarbeiten einer Dienstanforderung des Benutzers basierend auf der empfangenen Information über den Dienst und einem Hardware- und/oder Software-Beschleunigungshilfsmittel der Plattformvorrichtung.

3. Einrichtung nach Anspruch 2, ferner umfassend:
Profilüberwachungsmittel, die eingerichtet sind zum Überwachen, ob eine Benutzeranforderung des Benutzers eine Angabe eines Vorrichtungsprofils eines Endgeräts umfasst, wobei die Benutzeranforderung von dem Endgerät empfangen wird; wobei
die Auswahlmittel eingerichtet sind zum Auswählen der Plattformvorrichtung zusätzlich basierend auf dem Vorrichtungsprofil.

4. Einrichtung nach einem der Ansprüche 2 und 3, ferner umfassend:
Überwachungsmittel, die eingerichtet sind zum Überwachen, ob eine Benutzeranforderung des Benutzers empfangen wird;
Auslösemittel, die eingerichtet sind zum Auslösen der Dienstinformationsanfragemittel, um die Information über den Dienst anzufordern, falls die Benutzeranforderung empfangen wird.

5. Einrichtung nach einem der Ansprüche 2 bis 4, wobei
die Empfangsmittel eingerichtet sind zum Empfangen eines Subskriptionsprofils des Benutzers als Reaktion auf die Informationsanforderung;
und die Einrichtung ferner Folgendes umfasst:
Abrufmittel, die eingerichtet sind zum Abrufen der Information über den Dienst aus dem Subskriptionsprofil.

6. Einrichtung nach Anspruch 1 oder 3, wobei
das Vorrichtungsprofil eine oder mehrere Angaben von Fähigkeiten aus einer hardwarebezogenen Fähigkeit des Endgeräts, einer softwarebezogenen Fähigkeit des Endgeräts, einer anwendungsbezogenen Fähigkeit des Endgeräts, einer durch das Endgerät unterstützten Anwendung und einem durch das Endgerät unterstützten Anwendungstyp umfasst, und/oder
das Vorrichtungsprofil eine Angabe des Hardware- und/oder Software-Beschleunigungshilfsmittels umfasst.

7. Einrichtung nach einem der Ansprüche 1 bis 6, ferner umfassend:
Konfigurationsspeichermittel, die eingerichtet sind zum Speichern einer Information über das Hardware- und/oder Software-Beschleunigungshilfsmittel, wobei die Information über das Hardware- und/oder Software-Beschleunigungshilfsmittel von einer Management-und-Orchestrierung-Vorrichtung empfangen wird;
Konfigurationsanforderungsmittel, die eingerichtet sind zum Anfordern der Information über das Hardware- und/oder Software-Beschleunigungshilfsmittel von der Management-und-Orchestrierung-Vorrichtung; und
Konfigurationsempfangsmittel, die eingerichtet sind zum Empfangen der Information über das Hardware- und/oder Software-Beschleunigungshilfsmittel von der Management-und-Orchestrierung-Vorrichtung.

8. Einrichtung (1004), umfassend:
Speichermittel, die eingerichtet sind zum Speichern eines Subskriptionsprofils für einen Benutzer, wobei das Subskriptionsprofil eine Angabe eines Dienstes, den der Benutzer nutzen darf, und eine Angabe eines Hardware- und/oder Software-Beschleunigungshilfsmittels, das zum Ausführen des Dienstes für den Benutzer verwendet werden kann, umfasst; und
Bereitstellungsmittel, die eingerichtet sind zum Bereitstellen (4) der Angabe des Hardware- und/oder Software-Beschleunigungshilfsmittels als Reaktion auf eine Anforderung (3) einer Information über Dienste, die der Benutzer aufrufen darf.

9. Verfahren zum Auswählen einer Plattformvorrichtung in einem Netz, das Plattformvorrichtungen mit verschiedenen Arten von Beschleunigungshilfsmitteln umfasst, wobei das Verfahren in einem Zugangsknoten (1002) durchgeführt wird und Folgendes umfasst:
Überwachen (S10), ob eine empfangene Benutzeranforderung (2) eines Endgeräts eine Angabe eines Vorrichtungsprofils des Endgeräts umfasst;
Auswählen (5, S20) der Plattformvorrichtung zum weiteren Verarbeiten der Benutzeranforderung basierend auf dem Vorrichtungsprofil und einem Hardware- und/oder Software-Beschleunigungshilfsmittel der Plattformvorrichtung.

10. Verfahren zum Auswählen einer Plattformvorrichtung in einem Netz, das Plattformvorrichtungen mit verschiedenen Arten von Beschleunigungshilfsmitteln umfasst, wobei das Verfahren in einem Zugangsknoten (1002) durchgeführt wird und Folgendes umfasst:
Anfordern (S110), durch eine Informationsanforderung (3), einer Information über einen Dienst, den ein Benutzer aufrufen darf;
Empfangen (4, S120) der Information über den Dienst als Reaktion auf die Informationsanforderung;
Auswählen (S130) der Plattformvorrichtung zum Verarbeiten einer Dienstanforderung des Benutzers basierend auf der empfangenen Information über den Dienst und einem Hardware- und/oder Software-Beschleunigungshilfsmittel der Plattformvorrichtung.

11. Verfahren nach Anspruch 10, ferner umfassend:
Überwachen, ob eine Benutzeranforderung des Benutzers eine Angabe eines Vorrichtungsprofils eines Endgeräts umfasst, wobei die Benutzeranforderung von dem Endgerät empfangen wird; wobei
das Auswählen der Plattformvorrichtung zusätzlich auf dem Vorrichtungsprofil basiert.

12. Verfahren nach einem der Ansprüche 10 und 11, ferner umfassend:
Überwachen, ob eine Benutzeranforderung des Benutzers empfangen wird;
Auslösen des Anforderns der Information über den Dienst, falls die Benutzeranforderung empfangen wird.

13. Verfahren nach einem der Ansprüche 10 bis 12, wobei
ein Subskriptionsprofil des Benutzers als Reaktion auf die Informationsanforderung empfangen wird; und das Verfahren ferner Folgendes umfasst:
Abrufen der Information über den Dienst aus dem Subskriptionsprofil.

14. Verfahren nach Anspruch 9 oder 11, wobei das Vorrichtungsprofil eine oder mehrere Angaben von Fähigkeiten aus einer hardwarebezogenen Fähigkeit des Endgeräts, einer softwarebezogenen Fähigkeit des Endgeräts, einer anwendungsbezogenen Fähigkeit des Endgeräts, einer durch das Endgerät unterstützten Anwendung und einem durch das Endgerät unterstützten Anwendungstyp umfasst, und/oder
das Vorrichtungsprofil eine Angabe des Hardware- und/oder Software-Beschleunigungshilfsmittels umfasst.

15. Verfahren nach einem der Ansprüche 9 bis 14, ferner umfassend:
Speichern einer Information über das Hardware- und/oder Software-Beschleunigungshilfsmittel, wobei die Information über das Hardware- und/oder Software-Beschleunigungshilfsmittel von einer Management-und-Orchestrierung-Vorrichtung empfangen wird;
Anfordern der Information über das Hardware- und/oder Software-Beschleunigungshilfsmittel von der Management-und-Orchestrierung-Vorrichtung; und
Empfangen der Information über das Hardware- und/oder Software-Beschleunigungshilfsmittel von der Management-und-Orchestrierung-Vorrichtung.

16. Verfahren, das in einer Datenbank (1004) durchgeführt wird, umfassend:
Speichern eines Subskriptionsprofils für einen Benutzer, wobei das Subskriptionsprofil eine Angabe eines Dienstes, den der Benutzer nutzen darf, und eine Angabe eines Hardware- und/oder Software-Beschleunigungshilfsmittels, das zum Ausführen des Dienstes für den Benutzer verwendet werden kann, umfasst; und
Bereitstellen (4) der Angabe des Hardware- und/oder Software-Beschleunigungshilfsmittels als Reaktion auf eine Anforderung (3) einer Information über Dienste, die der Benutzer aufrufen darf.

17. Computerprogrammprodukt, das einen Satz von Anweisungen umfasst, die bei Ausführung des Programms durch einen Computer veranlassen, dass der Computer das Verfahren nach einem der Ansprüche 9 bis 16 durchführt.

## Revendications

1. Appareil (1002) pour sélectionner un dispositif de de plate-forme dans un réseau comprenant des dispositifs de plate-forme ayant différents types d'installations d'accélération, comprenant
un moyen de surveillance de profil adapté pour surveiller (S10) qu'une requête d'utilisateur reçue (2) d'un terminal comprend ou non une indication d'un profil de dispositif du terminal ;
un moyen de sélection adapté pour sélectionner (5, S20) le dispositif de plate-forme en vue d'un traitement complémentaire de la requête d'utilisateur sur la base du profil de dispositif et d'une installation d'accélération matérielle et/ou logicielle du dispositif de plate-forme.

2. Appareil (1002) pour sélectionner un dispositif de de plate-forme dans un réseau comprenant des dispositifs de plate-forme ayant différents types d'installations d'accélération, comprenant
un moyen de requête d'informations de service adapté pour demander (S110), au moyen d'une requête d'informations (3), des informations sur un service qu'un utilisateur est autorisé à appeler ;
un moyen de réception adapté pour recevoir (4, S120) les informations sur le service en réponse à la requête d'informations ;
un moyen de sélection adapté pour sélectionner (5, S130) un dispositif de plate-forme pour traiter une requête de service de l'utilisateur sur la base des informations reçues sur le service et d'une installation d'accélération matérielle et/ou logicielle du dispositif de plate-forme.

3. Appareil selon la revendication 2, comprenant en outre
un moyen de surveillance de profil adapté pour surveiller qu'une requête d'utilisateur de l'utilisateur comprend ou non une indication d'un profil de dispositif d'un terminal, la requête d'utilisateur étant reçue depuis le terminal ; dans lequel
le moyen de sélection est adapté pour sélectionner le dispositif de plate-forme sur la base en outre du profil de dispositif.

4. Appareil selon l'une quelconque des revendications 2 et 3, comprenant en outre
un moyen de surveillance adaptée pour surveiller qu'une requête d'utilisateur de l'utilisateur est reçue ou non ;
un moyen de déclenchement adapté pour déclencher le moyen de requête d'informations de service pour demander les informations sur le service si la requête d'utilisateur est reçue.

5. Appareil selon l'une quelconque des revendications 2 à 4, dans lequel
le moyen de réception est adapté pour recevoir un profil d'abonnement de l'utilisateur en réponse à la requête d'informations ;
et l'appareil comprend en outre
un moyen de recouvrement adapté pour recouvrer les informations sur le service à partir du profil d'abonnement.

6. Appareil selon la revendication 1 ou 3, dans lequel au moins
le profil de dispositif comprend une ou plusieurs indications de capabilités parmi une capabilité de type matériel du terminal, une capabilité de type logiciel du terminal, une capabilité de type application du terminal, une application prise en charge par le terminal, et un type d'application pris en charge par le terminal, et
le profil de dispositif comprend une indication de l'installation d'accélération matérielle et/ou logicielle.

7. Appareil selon l'une quelconque des revendications 1 à 6, comprenant en outre
un moyen de mémorisation de configuration adapté pour mémoriser des informations sur l'installation d'accélération matérielle et/ou logicielle, les informations sur l'installation d'accélération matérielle et/ou logicielle étant reçues depuis un dispositif de gestion et d'orchestration ;
un moyen de requête de configuration adapté pour demander les informations sur l'installation d'accélération matérielle et/ou logicielle au dispositif de gestion et d'orchestration ; et
un moyen de réception de configuration adapté pour recevoir les informations sur l'installation d'accélération matérielle et/ou logicielle depuis le dispositif de gestion et d'orchestration.

8. Appareil (1004), comprenant
un moyen de mémorisation adapté pour mémoriser un profil d'abonnement d'un utilisateur, le profil d'abonnement comprenant une indication d'un service que l'utilisateur est autorisé à utiliser et une indication d'une installation d'accélération matérielle et/ou logicielle qui peut être utilisée pour exécuter le service pour l'utilisateur ; et
un moyen de fourniture adapté pour fournir (4) l'indication de l'installation d'accélération matérielle et/ou logicielle en réponse à une requête (3) demandant des informations sur les services que l'utilisateur est autorisé à appeler.

9. Procédé de sélection d'un dispositif de plate-forme dans un réseau comprenant des dispositifs de plate-forme ayant différents types d'installations d'accélération, le procédé étant exécuté dans un nœud d'accès (1002) et comprenant
la surveillance (S10) qu'une requête d'utilisateur reçue (2) d'un terminal comprend ou non une indication d'un profil d'utilisateur du terminal ;
la sélection (5, S20) du dispositif de plate-forme en vue d'un traitement supplémentaire de la requête d'utilisateur sur la base du profil de dispositif et d'une installation d'accélération matérielle et/ou logicielle du dispositif de plate-forme.

10. Procédé de sélection d'un dispositif de plate-forme dans un réseau comprenant des dispositifs de plate-forme ayant différents types d'installations d'accélération, le procédé étant exécuté dans un nœud d'accès (1002) et comprenant
la demande (S110), par une requête d'informations (3), d'informations sur le service qu'un utilisateur est autorisé à appeler ;
la réception (4, S120) des informations sur le service en réponse à la requête d'informations ;
la sélection (S130) du dispositif de plate-forme pour traiter une requête de service de l'utilisateur sur la base des informations reçues sur le service et d'une installation d'accélération matérielle et/ou logicielle du dispositif de plate-forme.

11. Procédé selon la revendication 10, comprenant en outre
la surveillance qu'une requête d'utilisateur de l'utilisateur comprend ou non une indication d'un profil de dispositif d'un terminal, la requête d'utilisateur étant reçue depuis le terminal ; dans lequel
la sélection du dispositif de plate-forme est basée de plus sur le profil de dispositif.

12. Procédé selon l'une quelconque des revendications 10 et 11, comprenant en outre
la surveillance qu'une requête d'utilisateur de l'utilisateur est reçue ou non ;
le déclenchement de la demande des informations sur le service si la requête d'utilisateur est reçue.

13. Procédé selon l'une quelconque des revendications 10 à 12, dans lequel
un profil d'abonnement de l'utilisateur est reçu en réponse à la requête d'informations ;
et le procédé comprenant en outre
le recouvrement des informations sur le service à partir du profil d'abonnement.

14. Procédé selon la revendication 9 ou 11, dans lequel au moins
le profil de dispositif comprend une ou plusieurs indications de capabilités parmi une capabilité de type matériel du terminal, une capabilité de type logiciel du terminal, une capabilité de type application du terminal, une application prise en charge par le terminal, et un type d'application pris en charge par le terminal, et
le profil de dispositif comprend une indication de l'installation d'accélération matérielle et/ou logicielle.

15. Procédé selon l'une quelconque des revendications 9 à 14, comprenant en outre
la mémorisation d'informations sur l'installation d'accélération matérielle et/ou logicielle, les informations sur l'installation d'accélération matérielle et/ou logicielle étant reçues depuis un dispositif de gestion et d'orchestration ;
la demande des informations sur l'installation d'accélération matérielle et/ou logicielle au dispositif de gestion et d'orchestration ; et
la réception des informations sur l'installation d'accélération matérielle et/ou logicielle depuis le dispositif de gestion et d'orchestration.

16. Procédé exécuté dans une base de données (1004), comprenant
la mémorisation d'un profil d'abonnement d'un utilisateur, le profil d'abonnement comprenant une indication d'un service que l'utilisateur est autorisé à utiliser et une indication d'une installation d'accélération matérielle et/ou logicielle qui peut être utilisée pour exécuter le service pour l'utilisateur ; et
la fourniture (4) de l'indication de l'installation d'accélération matérielle et/ou logicielle en réponse à une requête (3) d'informations sur des services que l'utilisateur est autorisé à appeler.

17. Produit-programme informatique comprenant un ensemble d'instructions qui, à l'exécution du programme sur un ordinateur, amène l'ordinateur à mettre en œuvre le procédé selon l'une quelconque des revendications 9 à 16.
